# EUROPÄISCHE PATENTSCHRIFT

(11) **EP 0 507 892 B1**
(45) Veröffentlichungstag und Bekanntmachung des Hinweises auf die Patenterteilung: **09.10.1996**
(21) Anmeldenummer: 91912434.7
(22) Anmeldetag: 23.07.1991
(51) Int. Cl.: G10K 9/12, G10K 13/00

(54) **ULTRASCHALLWANDLER**
ULTRASONIC TRANSDUCER
TRANSDUCTEUR ULTRASONORE

(30) Priorität: 04.08.1990 DE 4024791; 22.06.1991 DE 4120681
(43) Veröffentlichungstag der Anmeldung: 14.10.1992
(73) Patentinhaber: ROBERT BOSCH GMBH, 70442 Stuttgart (DE)
(72) Erfinder: RAPPS, Peter, D-7500 Karlsruhe 41 (DE); KNOLL, Peter, D-7505 Ettlingen 1 (DE); PACHNER, Franz, D-7521 Ubstadt (DE); NOLL, Martin, D-6446 Nentershausen (DE); FISCHER, Michael, D-7530 Pforzheim (DE)
(86) Internationale Anmeldenummer: DE9100596
(87) Internationale Veröffentlichungsnummer: WO9202795

(56) Entgegenhaltungen:
- EP-A- 0 075 302
- WO-A-88/08539
- DE-A- 2 125 784
- FR-A- 2 419 642
- US-A- 3 786 202
- US-A- 4 486 742

## Beschreibung

### Stand der Technik

Die Erfindung geht aus von einem Ultraschallwandler nach der Gattung des Hauptanspruchs. Aus der DE-OS 31 37 745 ist schon ein Ultraschallwandler bekannt, der als Topfwandler ausgebildet ist. An bestimmten Stellen seines Topfes ist als Dämpfungsmaterial eine Vergußmasse angebracht, die beim Senden des Ultraschallwandlers die Ausbreitung des Schalls in den bedämpften Richtungen sehr stark unterdrückt. Die Schallausbreitung in Richtung des nicht bedämpften Schalltrichters erfolgt unbedämpft mit entsprechend hoher Energie.

Beim Empfang von Schallwellen ist die Empfindlichkeit an den bedämpften Stellen des Schalltrichters besonders gering, so daß Schallwellen im wesentlichen nur aus den unbedämpften Richtungen empfangen werden können.

Derartige Topfwandler haben die Eigenschaft, daß der Abstrahlwinkel in der bedämpften Richtung relativ klein ist, während er in der unbedämpften Richtung relativ groß ist. Möchte man beispielsweise Hindernisse im Rückraum eines Kraftfahrzeuges lückenlos erkennen, dann müssen mehrere derartige Sensoren nebeneinander angeordnet werden.

Aus der US 4,486,742 ist ein Mehrfrequenz-Hornsystem bekannt, bei dem die akustischen Wellen mit einem piezoelektrischen Vibrator erzeugt werden. Dabei wird zur Erzeugung von mehreren Tönen der piezoelektrische Vibrator auf zwei oder mehr Resonanzfrequenzen angeregt. Das piezoelektrische Material ist dabei zentrisch auf einer etwa rechteckförmigen Metallscheibe aufgebracht. Die etwa rechteckförmige Metallscheibe ist von einer ringförmigen Membran umgeben.

Weiterhin ist aus der DE-OS 21 25 784 ein elektroakustischer Wandler bekannt, der als Lautsprecher ausgebildet ist. Er hat eine Schwingmembran, auf der an verschiedenen Stellen elektromechanische Wandler angeordnet sind. Die elektromechanischen Wandler sind mit elektrischen Verstärkern derart gekoppelt, daß die Anregung aller Bereiche der Membran nahezu phasengleich erfolgt.

### Vorteile der Erfindung

Der erfindungsgemäße Ultraschallwandler mit den kennzeichnenden Merkmalen des Anspruchs 1 hat demgegenüber den Vorteil, daß die Membran bzw. das Gehäuse durch deren Ausbildung die gewünschte Schwingungscharakteristik (Ultraschallkeule) bewirkt, so daß keine Vergußmassen erforderlich sind.

Bei einer Ausführungsform der Erfindung ist besonders vorteilhaft, daß die Wandung der Membran an zwei gegenüberliegenden Seiten verstärkt ist. Dadurch wird die Herstellung des Ultraschallwandlers besonders einfach und kostengünstig.

Durch die in den Unteransprüchen aufgeführten Maßnahmen sind vorteilhafte Weiterbildungen und Verbesserungen des im Hauptanspruch angegebenen Ultraschallwandlers möglich.

Preiswerte Ausführungsformen des Ultraschallwandlers ergeben sich, wenn das Gehäuse aus einem Kunststoff gefertigt wird, der durch ein einfaches Spritzverfahren besonders leicht verarbeitbar ist.

Weitere Vorteile der Erfindung sind der Beschreibung entnehmbar.

### Zeichnungen

Ausführungsbeispiele der Erfindung sind in der Zeichnung dargestellt und in der nachfolgenden Beschreibung näher erläutert. Es zeigen Figur 1a und 1b grafische Darstellungen für die Ultraschallkeulen, Figur 2 ein Schnittbild, Figur 3a und b einen Ultraschallwandler nach dem Stand der Technik und Figur 4a und b ein Ausführungsbeispiel,

### Beschreibung der Ausführungsbeispiele

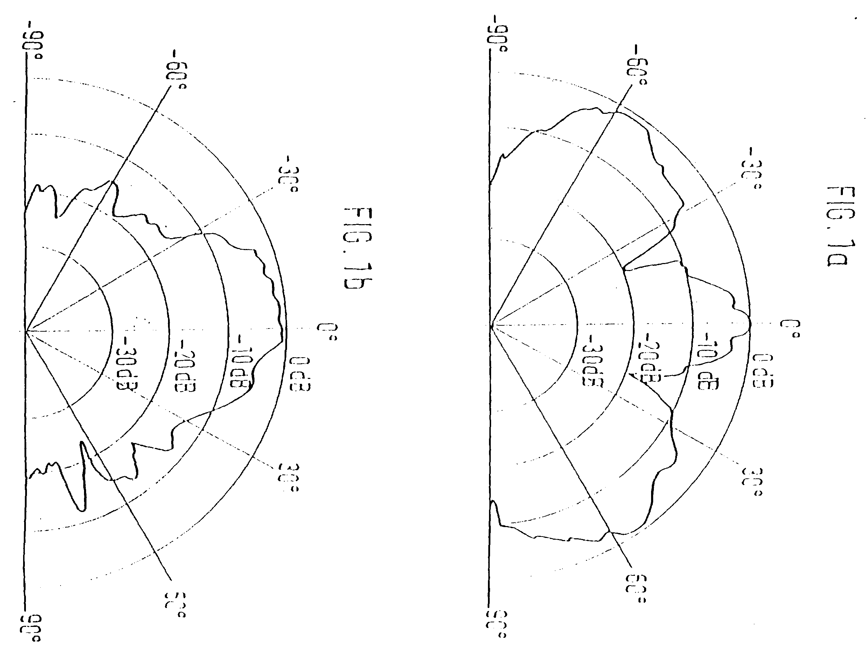

In Figur 1a und b sind Diagramme dargestellt, die die Abstrahlcharakteristik eines bekannten Ultraschallwandlers wiedergeben. In Figur la wird die horizontale Abstrahlcharakteristik wiedergegeben. Daraus ist zu sehen, daß die Dämpfung der Hauptkeule der Ultraschallwellen im Bereich um 0° gering ist. Bei zunehmendem Ausbreitungswinkel ist die Dämpfung der Schallwellen etwas größer und wird bei den Nebenkeulen im Bereich zwischen etwa 30 und 80° wieder geringer. Die dargestellte Dämpfungskurve weist also eine weitwinklige Abstrahlcharakteristik in der Horizontalen auf.

In Figur 1b ist die vertikale Abstrahlcharakteristik des bekannten Ultraschallwandlers dargestellt. Aus dieser Darstellung ist ersichtlich, daß die Dämpfung im 0°-Bereich am geringsten ist, während sie mit zunehmenden Winkel immer größer wird. Die vertikale Abstrahlchrakteristik kann daher als schmalwinklig angesehen werden.

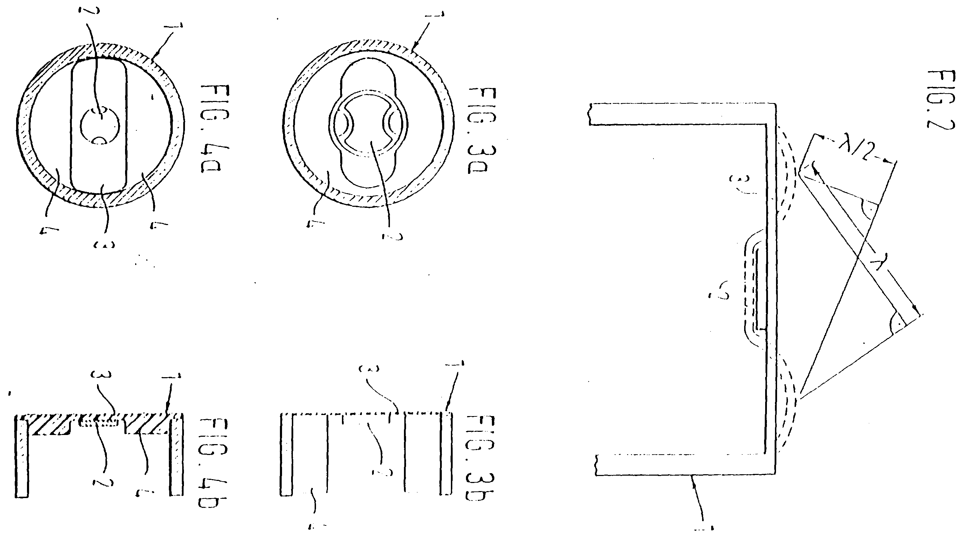

In Figur 2 ist ein Schnitt durch den bekannten Ultraschallwandler dargestellt, der die prinzipielle Funktion der Schallwellenerzeugung wiedergibt. Der auf der Membran 3 angeordnete Piezoschwinger 2 bewirkt bei Ansteuerung mit einem Wechselspannungssignal, daß die Membran 3 entsprechend der Frequenz der Ansteuerspannung deformiert wird und dadurch Schwingungen erzeugt. Der Piezoschwinger 2 ist zentrisch auf der Membran 3 aufgeklebt. Bei geeigneter. Wahl des Durchmessers des Piezoschwingers 2, beispielsweise ein Drittel des Membrandurchmessers, wird die Membran3 im mittleren Bereich gegenphasig zu den benachbarten Bereichen schwingen. Die vom Sensor abgestrahlte Ultraschallkeule entsteht aus der Überlagerung der von den drei Schwingungszentren ausgehenden Kugelwellen. So bildet sich in Vorwärtsrichtung eine starke Hauptkeule aus, die durch konstruktive Interferenz der beiden gleichphasig schwingenden Seitenbereiche entsteht. Konstruktive Interferenz liegt auch dann vor, wenn der Gangunterschied der beiden Teilwellen ein ganzzahliges Vielfaches der Wellenlänge λ beträgt, was gemäß der Figur la zu den Nebenkeulen führt. Beträgt der Gangunterschied λ/2, dann tritt destruktive Interferenz (Auslöschung) ein, was gemäß der Figur la aus den stärker gedämpften Bereichen bei etwa ± 20 bis 25° zu erkennen ist. Je nachdem, wie stark die Deformation der Membran 3 ist, bilden sich entsprechende Hauptmaxima, beispielsweise in 0°-Richtung, d. h. in Richtung der Flächennormalen zum Piezoschwinger bzw. Minima und Nebenmaxima aus.

Bei dem erfindungsgemäßen Ausführungsbeispiel wird dagegen versucht, durch Formung der Membran 3 mit geeigneten Mitteln die Ausbreitungscharakteristik der Ultraschallkeule für die Grundwelle zu beeinflussen.

Bei einem aus der DE-OS 31 37 745 bekannten Ultraschallwandler wurde zur Bestimmung der Abstrahlcharakteristik unterhalb der Membran 3 und am Gehäuse 1 eine Vergußmasse aufgebracht, deren Härte unterschiedlich ist zu der der Membran 3 (Figur 3a, b). Die Vergußmasse ist nachträglich nach der Montage der Membran in das Gehäuse einzubringen. Beim Erfindungsgegenstand wird dagegen keine Vergußmasse benötigt.

Ein Ausführungsbeispiel der Erfindung ist in Figur 4a in Draufsicht und Figur 4b im Schnitt dargestellt. Das Gehäuse 1 ist kreisringförmig ausgebildet und weist eine Membran 3 auf, die an . zwei gegenüberliegenden Seiten 4 verstärkt ausgebildet ist. Der Unterschied zum bekannten Ultraschallwandler besteht darin, daß die Membran 3 an den zwei gegenüberliegenden Seiten aus gleichem Material verstärkt ausgebildet ist. Eine derartige Membran läßt sich sehr preiswert im Fließpreßverfahren herstellen.

Die Lage der Minima und Maxima in der Schallfeldverteilung, wie sie in den Figuren 1a und 1b dargestellt wurden, ist frequenzabhängig. Es hat sich als vorteilhaft gezeigt, daß durch Variation der Frequenz (Wobbeln) die Lage der Minima und Maxima derart variiert werden kann, daß im zeitlichen Mittel eine lückenlose Abstrahlcharakteristik in der Horizontalen entsteht. Die starken Dämpfungsbereiche entfallen, so daß der Sensor in der Horizontalen in einem Bereich bis etwa 180° nahezu die gleiche Empfindlichkeit besitzt.

Bei der Herstellung des Gehäuses werden im allgemeinen Metalle, beispielsweise Aluminium verwendet. Die elastischen Eigenschaften der Metalle unterstützen die Schwingungsbildung der Schallwellen. Um die Bearbeitungskosten für die Metallgehäuse zu reduzieren, hat es sich als günstig erwiesen, die Gehäuse aus einem Kunststoff herzustellen. Besonders geeignet hierfür sind sogenannte flüssigkristalline Polymere, die vergleichbare Eigenschaften bezüglich der Elastizität haben wie die verwendeten Metalle. Die Kunststoffgehäuse sind beispielsweise in einem einfachen Spritzverfahren herstellbar.

Ultraschall-Wandler der beschriebenen Bauart weisen ein ausgeprägtes Nachschwingen auf, nachdem die zum Senden benötigte Energiezufuhr abgeschaltet wird. Dies ist dann störend, wenn ein und derselbe Ultraschall-Wandler sowohl zum Senden als auch zum Empfangen der Echos verwendet wird und wenn Echos mit kurzen Laufzeiten detektiert werden sollen. In diesem Fall kann das Echosignal sich dem Signal des ausschwingenden Wandlers überlagern und nicht mehr mit einfachen Mitteln erkannt werden. In weiterer Ausgestaltung der Erfindung ist daher vorgesehen, die Membran 3 auf der Innenseite ganzflächig oder auf Teilflächen mit einer Bedämpfungsschicht auszugestalten, um das Nachschwingen der Membran 3 zu verkürzen. Dabei ist vorgesehen, als Bedämpfungsschicht eine Folie aufzukleben oder eine entsprechende Vergußmasse auf die Innenseite der Membran 3 zu gießen. Die Elastizität der Bedämpfungsschicht ist so gewählt, daß die Membran während der Energiezufuhr bei der gewünschten Resonanzfrequenz schwingt. Nach Abschalten der Energiezufuhr soll die Schwingung möglich rasch abgeklungen sein.

## Patentansprüche

1. Ultraschallwandler mit einer zur Schwingung anregbaren Membran, die von einem ringförmigen Gehäuse eingefaßt ist, auf der mindestens ein Piezoschwinger angeordnet ist, und deren Schwingungscharakteristik (Ultraschallkeule) in vorgegebenen Richtungen beeinflußt ist, dadurch gekennzeichnet, daß die Membran (3) unterschiedliche Dicken aufweist, daß die dünnere Schicht in etwa rechteckförmig ausgebildet ist und daß im Bereich der dünneren Schicht der Piezoschwinger (2) angeordnet ist.

2. Ultraschallwandler nach Anspruch 1, dadurch gekennzeichnet, daß das Verhältnis von dicken zu dünnen Schichten der Membran mindestens 2:1 ist.

3. Ultraschallwandler nach einem der vorhergehenden Ansprüche, dadurch gekennzeichnet, daß die Membran (3) und/oder das Gehäuses (1) derart ausgebildet ist, so daß die Schwingung auf die Grundwelle der Ultraschallkeule begrenzt ist.

4. Ultraschallwandler nach einem der vorhergehenden Ansprüche, dadurch gekennzeichnet, daß die Ansteuerung des mindestens einen Piezoschwingers (2, 4) mit einer Wechselspannung erfolgt, deren Frequenz veränderbar ist.

5. Ultraschallwandler nach einem der vorhergehenden Ansprüche, dadurch gekennzeichnet, daß das Gehäuse (1) für den Piezoschwinger einen elastischen Kunststoff, vorzugsweise ein flüssigkristallines Polymer aufweist.

6. Ultraschallwandler nach einem der vorhergehenden Ansprüche, dadurch gekennzeichnet, daß die auf der Innenseite der Membran (3) ganzflächig oder auf Teilflächen aufgebrachte Bedämpfungsschicht zur Verkürzung der Nachschwingdauer der Membran verwendbar ist.

7. Ultraschallwandler nach Anspruch 6, dadurch gekennzeichnet, daß der Innenraum des Gehäuses (1) über der Bedämpfungsschicht mit einer Vergußmasse ganz oder teilweise gefüllt ist.

## Claims

1. Ultrasonic transducer comprising a diaphragm which can be excited into vibration and which is framed by an annular case, on which diaphragm at least one piezoelectric oscillator is arranged and the vibration characteristic (ultrasonic beam) of which can be influenced in predetermined directions, characterised in that the diaphragm (3) has different thicknesses, that the thinner layer is constructed to be approximately rectangular and that the piezoelectric oscillator (2) is arranged in the area of the thinner layer.

2. Ultrasonic transducer according to Claim 1, characterised in that the ratio between thick and thin layers of the diaphragm is at least 2:1.

3. Ultrasonic transducer according to one of the preceding claims, characterised in that the diaphragm (3) and/or the case (1) is designed in such a manner that the vibration is limited to the fundamental of the ultrasonic beam.

4. Ultrasonic transducer according to one of the preceding claims, characterised in that the drive of at least one piezoelectric oscillator (2, 4) is effected with an alternating voltage, the frequency of which can be varied.

5. Ultrasonic transducer according to one of the preceding claims, characterised in that the case (1) for the piezoelectric oscillator exhibits an elastic plastic, preferably a liquid-crystalline polymer.

6. Ultrasonic transducer according to one of the preceding claims, characterised in that the damping layer applied over the entire area or to part-areas on the inside of the diaphragm (3) can be used for shortening the post-vibration time of the diaphragm.

7. Ultrasonic transducer according to Claim 6, characterised in that the inside space of the case (1) is wholly or partially filled with a casting compound over the damping layer.

## Revendications

1. Transducteur d'ultrasons comprenant une membrane excitée en oscillations sertie dans un boîtier annulaire et portant au moins un oscillateur piézo-électrique dont la caractéristique d'oscillation (lobe d'ultrasons) est influencée dans des directions déterminées,
caractérisé en ce que
la membrane (3) a des épaisseurs différentes, la couche la plus mince ayant une forme sensiblement rectangulaire et est prévue au niveau de la couche plus mince de l'oscillateur piézo-électrique (2).

2. Transducteur d'ultrasons selon la revendication 1,
caractérisé en ce que
le rapport entre les couches épaisses et les couches minces de la membrane est au moins égal à 2:1.

3. Transducteur à ultrasons selon l'une des revendications précédentes,
caractérisé en ce que
la membrane (3) et/ou le boîtier (1) sont réalisés pour limiter l'oscillation à l'ondulation fondamentale du lobe des ultrasons.

4. Transducteur d'ultrasons selon l'une des revendications précédentes,
caractérisé en ce que
la commande d'au moins un oscillateur piézo-électrique (2, 4) est assurée par une tension alternative dont la fréquence est variable.

5. Transducteur d'ultrasons selon l'une des revendications précédentes,
caractérisé en ce que
le boîtier (1) de l'oscillateur piézo-électrique comprend une matière plastique élastique, de préférence un polymère fluide cristallin.

6. Transducteur d'ultrasons selon l'une des revendications précédentes,
caractérisé en ce que
la couche vaporisée sur la face intérieure de la membrane (3), sur toute la surface ou une partie de la surface, est utilisée pour raccourcir la durée des oscillations après l'impulsion de la membrane.

7. Transducteur d'ultrasons selon la revendication 6,
caractérisé en ce que
le volume intérieur du boîtier (1) est rempli partiellement ou totalement d'une masse coulée sur la couche déposée à la vapeur.
